(19) Europäisches Patentamt
European Patent Office
Office européen des brevets

(11) Publication number: 0 684 066 A2

# EUROPEAN PATENT APPLICATION

(21) Application number: 95302293.6

(22) Date of filing: 06.04.95

(51) Int. Cl.6: **B01D 53/22**, B01D 53/047

(30) Priority: 26.05.94 US 249589

(43) Date of publication of application:
29.11.95 Bulletin 95/48

(84) Designated Contracting States:
BE DE FR GB IT LU NL

(71) Applicant: THE BOC GROUP, INC.
575 Mountain Avenue
Murray Hill,
New Jersey 07974 (US)

(72) Inventor: Kapoor, Akhilesh

107 Vose Avenue, Apartment Number 8
South Orange,
New Jersey 07079 (US)
Inventor: Krishnamurthy, Ramachandran
13 Ross Avenue
Chestnut Ridge,
New York 10977 (US)

(74) Representative: Gough, Peter
The BOC Group plc
Chertsey Road
Windlesham, Surrey GU20 6HJ (GB)

(54) Method of recovering a light element from a dilute feed.

(57) A method of recovering a light element comprising hydrogen or helium from a high pressure feed stream. The feed stream comprises the light element in a concentration of less than 30% by volume and also, hydrocarbons and trace heavy contaminants. Methane and nitrogen may be in the high pressure feed stream if derived from a natural gas source. The trace heavy contaminants are removed from the high pressure feed stream through absorption in one or more beds of activated carbon and the feed stream, still at high pressure, is passed through a membrane unit having a membrane design to allow permeation of the light element while rejection of the hydrocarbons, possibly methane, and nitrogen. The membrane unit produces a process stream enriched to somewhere above 40% in the light elements and a mass flow rate that is only a fraction of the mass flow rate of the feed stream. The process stream is then compressed and subjected to a pressure swing adsorption process utilizing one or more adsorbents to least absorb the hydrocarbons to produce a product stream highly enriched in the light element or 98% enriched and above. Since the mass flow rate of the process stream is very low, very little energy need be expended in compressing the process stream as compared with prior art processes using cryogenic rectification. Additionally, since the waste stream is rejected at pressure, if the pressure is high enough, it can simply be returned to a source of the feed stream without recompression or if not being supplied at a requisite high pressure, it can be recompressed with a blower and then returned to the supply.

The present invention relates to a method of recovering a light element comprising hydrogen or helium from a feed stream having a concentration of the light element of no greater than 30%. More particularly, the present invention relates to such a method in which the light elements are removed from the high pressure feed stream by a membrane unit so that light elements permeate through the membrane unit to produce a process stream and the process stream is subjected to pressure swing adsorption to produce a product stream highly concentrated in the light elements.

Light elements such as hydrogen and helium are found in high pressure feed streams produced as a result of a variety of petrochemical processes and natural gas processing. For instance, methane is recovered from a natural gas comprising methane, He, $N_2$, $O_2$, $C_2$ and higher hydrocarbons by cryogenic distillation. The distillation entails compressing the natural gas stream and then cooling such stream to a temperature suitable for its rectification. The rectification of the stream concentrates the light elements such as He as tower overhead. The hydrocarbons concentrate in the bottom of the column and are removed as a fuel stream. In order to effectuate the cooling, the waste stream is turboexpanded and then passed countercurrently through the heat exchanger. The tower overhead, enriched with the light element, constitutes a high pressure feed stream which can be treated with a pressure swing adsorption process in order to further concentrate the light element for formation of a product stream. Other examples concern various refiner off-gases that contain hydrogen and hydrocarbons form the high pressure feed stream to be further treated by a pressure swing adsorption process in order to form a product stream having a concentrated hydrogen content.

The recovery of light elements in the manner described above requires intermediate recompression in the pressure swing adsorption process in order to produce sufficiently high recoveries. The energy expenditure involved in such recompression will be dependent upon the mass flow rate of the high pressure feed stream, in other words the total mass flow rate of feed to be handled by the pressure swing adsorption process. Additionally, the major portion of the high pressure feed stream is rejected from the pressure swing adsorption process at low pressure. In order to recycle such low pressure stream back to the supply or process being used to make such feed stream or to some other process concurrently being conducted, the low pressure stream must be recompressed to the high pressure of the feed stream. Thus, an additional energy expenditure is involved if the low pressure stream of the pressure swing adsorption process is to be recycled.

As will be described, the present invention provides a method of recovering light elements comprising hydrogen and helium from a feed stream that is able to be utilized either for return to supply or in a combined process at pressure and which utilizes less energy than processes of the prior art.

The present invention provides a method of recovering a light element comprising hydrogen or helium from a high pressure feed stream. Substantially all of the light element content of the feed stream is separated by at least one membrane unit. The feed stream comprises the light element in a concentration by volume of no greater than about 30% and the light element content of the high pressure feed stream is separated so that a minor part of the feed stream containing substantially all of the light element content permeates through the at least one membrane unit and a remaining major part of the feed stream is rejected from the membrane unit at a high pressure. This produces a waste stream from the remaining major part of the feed stream and a process stream enriched in the light element from the minor part of the feed stream. The process stream is compressed and subjected to a pressure swing adsorption process to produce a product stream highly enriched in the light element.

In accordance with the present invention, the light elements permeate through the membrane unit. As a result, the process stream has a very small volumetric flow rate. This flow rate can be compressed to the operating pressure required for the pressure swing adsorption process and intermediate flows from such process can be subjected to intermediate recompression at only a fraction of the energy expenditure of a prior art recovery process. Additionally, since most of the high pressure feed stream is rejected from the membrane at the high pressure it can be further utilized by being recycled, as described above, with little or no further compression required. It is to be noted that as used herein and in the claims, "high pressure" means a pressure about and above 7 bars, "enriched" means a concentration by volume of above incoming feed concentration, typically between about 40% and about 50% and "highly enriched" means a concentration above "enriched", typically by volume, above about 98%. It is to be further noted that a high pressure of about 20 bars absolute is a preferred pressure of the high pressure feed stream to be subjected to a recovery process in accordance with the present invention.

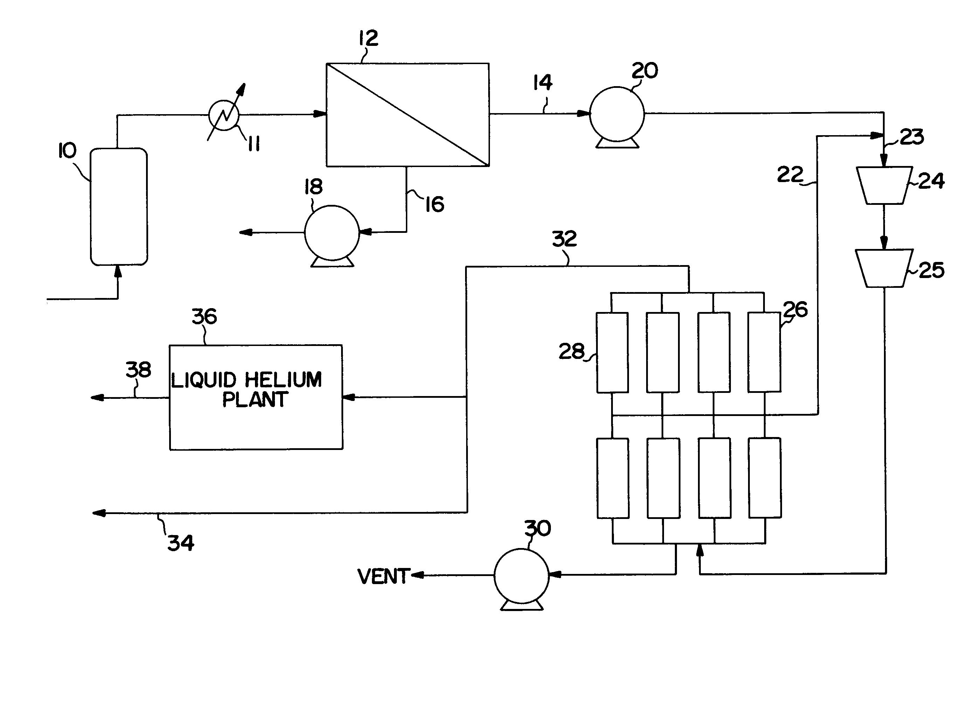

While the specification concludes with claims distinctly pointing out the subject matter that Applicant's regard as their invention, it is believed that the invention will be better understood when taken in connection with the accompanying sole figure which is a schematic diagram of a process in accordance with the present invention.

With reference to the sole figure, an apparatus is shown that can be adapted to either process a natural gas stream containing helium or a petrochemical process stream containing hydrogen. As indicated above a preferred pressure for such a feed stream is about 20 bars absolute. In fact, the higher the pressure the better the process may be conducted. Both types of feeds contain, in addition to either hydrogen or helium, possibly other elements, hydrocarbons and trace heavy contaminants. In case of a natural gas stream, a typical composition would be from between about 3% and 6% helium, methane content as high as about 30% with the remainder mainly nitrogen but also some carbon dioxide and possibly carbon monoxide.

The high pressure feed stream is processed by first passing the feed through an adsorption unit 10. Adsorption unit 10 removes substantially all of the trace heavy contaminants, such as the higher order hydrocarbons, from the feed to avoid contact of such contaminants with a membrane unit 12. As used herein and in the claims, the term "higher order hydrocarbons" is $C_3$ and greater hydrocarbons. Adsorption unit 10 can be a series of beds of activated carbon operating on an out of phase temperature swing adsorption cycle so that while one bed was adsorbing, another bed could be regenerated. Typical expended trace heavy contaminant removal from such an adsorption unit can be expected to be nearly all of the trace heavy contaminant content of the high pressure feed stream. As can be appreciated by those skilled in the art, it is possible that in an appropriate process, a feed stream could be manufactured with such higher order hydrocarbons. In such case, adsorption unit 10 could be deleted from an apparatus and method in accordance with the present invention.

The high pressure feed stream, after being preheated in a heater 11, is then introduced into membrane unit 12 for separating the helium or hydrogen therefrom. Heater 11 is optionally included to increase recovery. It is preferably a heat exchanger which uses a hot process stream from the base process being used to generate the high pressure feed stream. A suitable membrane is polysulfonate which can be obtained from a variety of companies involved in manufacturing membrane separation units. The helium or hydrogen permeates through the membrane to a very large extent while carbon dioxide and oxygen permeate through the membrane at a much slower rate. Methane, argon, nitrogen, ethane will be rejected. The permeation will produce a process stream 14 and a waste stream 16. Process stream 14 is enriched in helium or hydrogen to the extent of about 50%. The remainder of the process stream contains those constituents of the feed that have permeated through the membrane. Waste stream 16 contains the constituents of the feed stream that have not permeated through the membrane but is at a pressure of essentially the pressure of the feed stream.

The term "essentially" is used in connection with the feed pressure to adsorption unit 10, membrane unit 12 and waste stream 16 because invariably there will be some pressure lost due to piping. It is important to minimize such losses in the design of an apparatus in accordance with the present invention. As stated previously, higher pressures of the feed stream are preferred because even with the minor pressure losses, waste stream 16 will be returned at about the same pressure at its source so that it can be returned possibly without any further processing. At feed stream pressures below 20 bars absolute, an optional blower 18 can be provided to return waste stream 16 at pressure. Since however, the present invention contemplates operation at high pressures, even if waste stream 16 is not to be returned to the source of the feed, useful energy can be extracted by for instance a gas turbine without having to expend energy in recompressing waste stream 16. As indicated above, the foregoing is one aspect of the energy efficiency of a process conducted in accordance with the present invention.

It is important in the present invention that the concentration of helium or hydrogen in the feed stream be dilute, approximately less than 30% concentration by volume. Concentrations of about less than 15% are preferred with concentrations of 6% or less being particularly preferred in helium recovery. The result of separating of such dilute stream by a membrane unit will be at the mass flow rate of waste stream 14 will comprise only about 9 to 10% of the mass flow rate of the feed stream. This also will limit the amount of energy required in further processing the feed stream. Recovery and concentration of the hydrogen and helium within process stream 14 can be enhanced by optional provision of a vacuum pump 20. Since process stream 14 does not have a high mass flow rate, very little vacuum pumping need be expended. Additionally, even with vacuum pumping, the additional amount of energy that is required is minimal over prior art processes. Another possible recovery enhancement is to provide several membrane units having the form of membrane unit 12 in series with possibly vacuum pumping between membrane units.

After membrane unit 12 or possibly, optional vacuum pump 20, process stream 14 can have added to it intermediate recycle stream 22 to form a combined stream 23. Combined stream 23 is then subjected to compression by a compression unit 24 which compresses combined stream 23 or optionally process stream 14 alone, to a pressure suitable for its processing in a pressure swing adsorption unit 26. Pressure swing adsorption (PSA) unit 26, can consist of beds 28 operating out of phase so that one or more beds 26 produce while one or more beds 28 regenerate. Each bed 28 can be formed of activated carbon to preferentially absorb methane, nitrogen, water and carbon dioxide. If trace amounts of carbon monoxide are present within the feed, then each bed 28 should have a calcium zeolite section, for instance 5A to absorb the carbon monoxide.

Although many PSA processes are possible with the present invention, in the illustrated PSA unit 26, each bed 28 subjected to a pressurization step in which adsorption takes place. This step continues until saturation limits of the adsorbent are reached. After this point, each bed 28 is then subjected to a pressurization equalization step to initiate desorption of preferentially adsorbed components. This is followed by a vacuum phase in which each bed 28 is subjected to a vacuum by a vacuum pump 30. This subjects each bed 28 to as low as possible partial pressure of the more preferentially absorbed component to accelerate desorption. Prior to its use in absorbing, each bed 28 is subjected to a product repressurisation step to slowly raise the pressure in each bed 28 to operating pressure. Intermediate recycle stream 22, which is withdrawn between beds 28 is highly enriched in helium or hydrogen as the case may be and its addition to process stream 14 enhances recovery.

The output of PSA unit 26 is a product stream 32 which is highly enriched in helium or hydrogen, typically 98% and above. Product stream 32 is at the pressure of the pressure swing adsorption process and can either be utilized as gaseous product stream 34 for trailer filling or can be further processed by a liquefier unit 36 to produce a liquid product stream 38.

EXAMPLE

The following is a calculated example, in chart form, derived from a computer simulation of a process conducted by the apparatus illustrated herein.

4

| Stream | Pressure (Atmospheres) | Flow Rate (NM$^3$/hour) | Temperature (° C) | Composition (Volume %) |
|---|---|---|---|---|
| High Pressure Feed Stream | 55 | 16,990 | 30° | 4% He<br><br>68% $N_2$<br>24% $CH_4$<br>1% CO<br>2% $O_2$ and Ar<br>Trace Amounts of Heavy Hydrocarbons, Sulphur Compounds, etc. |
| Effluent From Adsorption Unit 10 | 54.7 | 16,990 | 30° | Same as Above Except Without Trace Impurities |
| Effluent From Adsorption Unit 10 After Heater 11 | 54.7 | 16,990 | 70° | Same as above |
| Process Stream 14 | 0.5 atm | 1665 | 70° | 40% He<br>42.5% $N_2$<br>15% $CH_4$<br>0.62% $CO_2$<br>0.62% CO<br>1.26% $O_2$ + Ar |
| Waste Stream Stream 16 | 54.0 | 15325 | 70° | 0.88% He<br>70.771% $N_2$<br>29.978% $CH_4$<br>1.041% $CO_2$<br>1.041% CO<br>2.081% $O_2$ and Ar |
| Product Stream 32 | 5.0 | 659 | 30° | 99% He 2000 ppm $O_2$ + Ar < 1 ppm $CH_4$ |
| Stream Vented by Vacuum Pump 30 | 1.1 | 1006 | 30° | 1.33% He<br><br>69.85% $N_2$<br>29.851% $CH_4$<br>1.030% $CO_2$<br>1.030% CO<br>1.94% $O_2$ + Ar |
| Recycle Stream 22 | 1.7 | 832 | 30° | 75% He<br>11.5% $N_2$<br>8.0% $CH_4$<br>0.5% $CO_2$<br>0.5% CO<br>1.5% $O_2$ + Ar |

It is to be noted that in the above example, the trace impurities in the high pressure feed stream are about 200 ppm. Furthermore, after vacuum pump 20, process stream 14 has a pressure of about 1 atmosphere.

While the present invention has been described with reference to a preferred embodiment, it will be understood by those skilled in the art that numerous changes, additions, and omissions may be made without departing from the spirit and scope of the present invention.

**Claims**

1. A method of recovering a light element comprising hydrogen or helium from a high pressure feed stream characterised by the steps of:

   i) separating substantially all of said light element content of said high pressure feed stream with at least one membrane unit, the high pressure feed stream comprising said light element in a concentration by volume of no greater than about 30% and said light element content of said high pressure feed stream being separated so that a minor part of said feed stream containing substantially all of said light element content permeates through said at least one membrane unit and a remaining major part of said feed stream is rejected from said membrane unit at a high pressure, thereby to produce a waste stream from said remaining major part of said feed stream and a process stream enriched in said light element from said minor part of said feed stream;

   ii) compressing the said process stream; and

   iii) subjecting said process stream to a pressure swing adsorption process to produce a product stream highly enriched in said light element.

2. A method as claimed in Claim 1, characterised in that said a high pressure feed stream also comprises higher order hydrocarbons and trace level contaminants potentially damaging to said at least one membrane unit;

   prior to separation by said at least one membrane unit, said high pressure feed stream is prepurified to remove substantially all of said trace level contaminants; and said pressure swing adsorption unit contains an adsorbent to remove said higher order hydrocarbons.

3. A method as claimed in Claim 1 or Claim 2, characterised in that said process stream is subjected to vacuum pumping intermediate said at least one membrane unit and said compression of said process stream.

4. A method as claimed in any one of Claims 1 to 3, characterised in that said waste stream is rejected and further utilized without recompression.

5. A method as claimed in any one of Claims 1 to 4, characterised in that the waste stream has a pressure of a range of between about 7 and 20 bars and is passed through a blower, to raise its pressure to an entering pressure of said high pressure feed stream and is then further utilized.

6. A method as claimed in any one of Claims 1 to 5, characterised in that said pressure swing adsorption process produces an intermediate recycle stream and said method also comprises combining said intermediate recycle stream with said process stream to form a combined stream, compressing said combined stream, and subjecting said process stream to said pressure swing adsorption process by subjecting said combined stream to said pressure swing adsorption process..

7. A method as claimed in any one of Claims 1 to 6, characterised in that said product stream is liquified to produce a liquid product stream.

8. A method as claimed in any one of Claims 1 to 7, characterised in that the light element is helium and the concentration of the light element in the high pressure feed stream is no greater than about 6%.

LIQUID HELIUM PLANT

VENT